# EUROPÄISCHE PATENTSCHRIFT

(11) **EP 0 631 062 B1**
(45) Veröffentlichungstag und Bekanntmachung des Hinweises auf die Patenterteilung: **26.03.1997**
(21) Anmeldenummer: 94108196.0
(22) Anmeldetag: 27.05.1994
(51) Int. Cl.: F16D 1/06, F16D 3/38

(54) **Spannverbindung zwischen einer Hülse und einer Welle**
Clamping connection between a sleeve and a shaft
Liaison de serrage entre une douille et un arbre

(30) Priorität: 27.05.1993 DE 4317579
(43) Veröffentlichungstag der Anmeldung: 28.12.1994
(73) Patentinhaber: Ehrenberg, Kurt, Ing., CH-6914 Carona (CH)
(72) Erfinder: Ehrenberg, Kurt, Ing., CH-6914 Carona (CH)
(74) Vertreter: Riebling, Peter, Dr.-Ing.

(56) Entgegenhaltungen:
- EP-A- 0 331 412
- WO-A-92/12355
- WO-A-92/16763
- DE-A- 2 943 346
- GB-A- 918 242
- GB-A- 935 632
- US-A- 1 329 479
- US-A- 3 603 624
- US-A- 3 642 311

## Beschreibung

Die Erfindung betrifft eine Spannvorrichtung nach dem Oberbegriff des Patentanspruchs 1.
Eine derartige Spannverbindung ist beispielsweise mit dem Gegenstand der DE 23 54 902 B1 bekannt geworden.

Derartige Spannverbindungen werden insbesondere für Wellenverbindungen benötigt, wo es darum geht, z.B. an einer Gelenkgabel eine entsprechende Welle lösbar oder montierbar zu befestigen. Hierbei ist es bekannt, in der Bohrung der Gelenkgabel die Welle einzustecken, die beispielsweise als Mehrkant ausgebildet sein kann, oder die mit einer Aussenverzahnung versehen ist.
Das Profil der Welle ist dein Profil der Bohrung in der Gelenkgabel angepasst.
Aus der genannten Druckschrift ist es bekannt, am Außenumfang der glatt-zylindrischen Welle eine geschlitzte Spannhülse anzulegen, an deren Außenumfang ein mit in radialer Richtung sich verengenden Keilflächen ausgebildeter Spannring anliegt.
Es ist hierbei nachteilig, eine geschlitzte Spannhülse zu verwenden, weil die Herstellungskosten wegen der Anbringung der Schlitze relativ hoch sind und die Hülse - wegen des Vorhandenseins der Schlitze - nicht am gesamten Umfang lastübertragend wirkt.

Ein weiterer Nachteil ist, daß die Hülse im Querschnitt zylindrisch ausgebildet ist. Es kann daher von seiten des Spannringes nur ein relativ geringes Verformungsweg auf die Hülse übertragen werden, weil die keilförmig sich verengenden Steuerflächen des Spannringes an dem zylindrischen Außenumfang der Hülse anliegen und nur eine relativ geringe Verformung in radialer Richtung erreichen können.

Außerdem wird eine glatt-zylindrische Welle verwendet, was mit dem Nachteil verbunden ist, daß die Spannverbindung nur reibschlüssig lastübertragend ist und kein Formschluß besteht. Es können daher keine hohen Kräfte in Umfangsrichtung, und vor allem in axialer Richtung auf die Welle übertragen werden.

Der Erfindung liegt deshalb die Aufgabe zugrunde, eine Spannverbindung der eingangs genannten Art so weiterzubilden, daß mit möglichst großem Spannquerschnitt und hohen Spannkräften eine Welle im Bereich einer Hülse gespannt werden kann.

Zur Lösung der gestellten Aufgabe ist die Erfindung durch die technische Lehre des Anspruchs 1 gekennzeichnet.

Wesentliches Merkmal der Erfindung ist, daß am Umfang der Hülse verteilt ein oder mehrere Nocken radial auswärts gerichtet angeformt sind, die mit den zugeordneten, an, Innenumfang des Spannrings angeordneten Keilnocken zusammenwirken. Damit wird der Vorteil erreicht, daß die Nocken der Hülse mit den zugeordneten Steuerflächen des Spannringes zusammenwirken und hierbei ein viel größerer Verstellweg der Hülse in radialer Richtung möglich ist, als vergleichsweise bei Verwendung einer zylindrischen Hülse.

Am Außenumfang der Hülse könnten hierbei auch (kugelförmige) Augenwarzen oder Kugeln angebracht werden, die eine punktuelle Verformung erbringen.

Mit dem Zusammenwirken von radial einwärts sich verengenden Keilnocken in Verbindung mit den am Aussenumfang der Hülse angeordneten Nocken ergibt sich nun der wesentliche Vorteil, daß beim Verdrehen des Spannrings in Umfangsrichtung sich die Keilnocken an den zugeordneten radial auswärts gerichteten Nocken der Hülse abwälzen und auf diese eine gewisse radial einwärts gerichtete Verformungskraft einleiten.

Damit wird die Hülse an genau definierten Stellen, nämlich an den Stellen, wo die Nocken angeformt sind, radial einwärts verformt und legt sich somit kraft- und formschlüssig an der im Innenbereich der Hülse angeordneten Welle an. Die Welle kann hierbei verschiedenartig profiliert sein, um eine drehfeste Spannverbindung mit der Hülse einzugehen.
Unter dem Begriff der nicht-zylindrischen Welle wird hierbei jegliche Kontur der Welle im Spannbereich als erfindungswesentlich beansprucht, die von dem glatt-zylindrischen Außenumfang einer Welle nach der DE 23 54 92 B1 abweicht.
Nur durch die Profilierung der Welle mindestens im Spannbereich wird eine kraft- und gleichzeitig auch formschlüssige Anlage der Hülse in diesem Bereich erreicht und damit ist eine viel größere Kraftübertragung möglich.
Hierbei werden sämtliche Profilierungen als erfindungswesentlich beansprucht, die eine derartige formschlüssige Verbindung mit dem Innenumfang der Hülse gewährleisten. Es kann dabei vorgesehen sein, lediglich konkave oder konvexe, sowie freigelegte Bereiche an der Welle im Spannbereich vorzusehen. Bei der Verformung der vorher am Innenumfang zylindrisch ausgebildeten Hülse kommt es somit zu einer entsprechenden Verformung der Hülse in die Profilabschnitte der Welle im Spannbereich.

In einer weiteren wichtigen Ausführungsform ist es vorgesehen, daß die Welle eine entsprechende Aussenverzahnung aufweist, die mit einer zugeordneten Innenverzahnung der Hülse korrespondiert. Bei Verformung der Innenverzahnung der Hülse verformt sich diese Verzahnung nun formschlüssig in die zugeordnete Aussenverzahnung der Welle, so daß es zu einem kraft- und formschlüssigen Verbund der beiden Teile kommt, wobei wichtig ist, daß über den gesamten Umfang der Welle gesehen ein gezieltes Spannen erfolgt.

In einer anderen Ausführungsform der vorliegenden Erfindung ist eine mehrkantige Welle vorgesehen, die bevorzugt als Dreikantwelle ausgebildet ist.

Hierbei ist wesentlich, daß sich die Profilquerschnitte der Dreikantwelle in zugeordnete Nuten am Innenumfang der Hülse anlegen und daß im Bereich dieser Nuten die vorher erwähnte radial einwärts gerichtete Verformung der Hülse stattfindet, um so wiederum eine formschlüssige, keilförmige Anlage der Hülse in diesen Bereichen an die Welle zu gewährleisten. Hierbei ist wichtig, daß über den Umfang der Welle verteilt, ein gezieltes (punktuelles) Spannen erfolgt.

In einer dritten Ausführungsform wird es bevorzugt, wenn die Welle als Rundprofilwelle ausgebildet ist, an deren Aussenumfang mehrere Zylinderstifte, Passstifte oder Kugeln eingelegt sind, wobei diese Zylinderstifte, Pass-Stifte oder Kugeln wiederum in Nuten der Hülse eingreifen, wobei im Bereich dieser Eingriffsquerschnitte die vorher erwähnte, radial einwärts gerichtete, Verformung der Hülse stattfindet.

Statt der erwähnten Zylinderstifte, die eingelegt sind, können auch direkt an der Welle angeformte, profilierte Mehrkantvorsprünge verwendet werden, die in zugeordnete Nuten der Hülse eingreifen.

Allen Ausführungsformen ist gemeinsam, daß mit der in Umfangsrichtung gerichteten Verdrehung eines Spannrings eine in radialer Richtung einwärts gerichtete Verformung einer Hülse stattfindet, wobei genau definierte Umfangsquerschnitte der Hülse verformt werden.
Es sind nämlich diese Umfangsquerschnitte, die mit radial gerichteten Nocken versehen sind, welche Nocken sich an den zugeordneten Keilnocken am Innenumfang des Spannringes anlegen.

Es wird hierbei bevorzugt, wenn der Eingriff der Keilnocken des Spannringes mit den Nocken der Hülse selbsthemmend ausgebildet ist, weil dann entsprechende Sicherungsvorrichtungen für den Spannring als Sicherung gegen Herabfallen eingespart werden können.

In einer weiteren bevorzugten Ausführungsform der Erfindung ist es vorgesehen, daß die Keilnocken sich in ihrer Breite von der Basis ausgehend verschmälern oder verjüngen, d.h. einen Konus bilden. Damit besteht der wesentliche Vorteil, daß beim Verdrehen des Spannringes die spezifische Flächenpresskraft, welche von der Keilnocke auf die zugeordnete Nocke an der Hülse ausgeübt wird, ständig größer wird, weil der spezifische Flächendruck aufgrund der Konusform der Keilnocke im Bereich zur Spitze hin immer größer wird und damit auch die Verformungskraft auf die zugeordnete Nocke der Hülse dementsprechend ansteigt.

Auf diese Weise ist es möglich, auch relativ starke Querschnitte von Hülsen entsprechend radial einwärts zu verformen. Versuche des Anmelders haben gezeigt, daß Wandstärken im Bereich von etwa 1 bis 3 mm der Hülse wunschgemäss verformt werden können, wobei mit dem Spannring - je nach gewünschtem Drehmoment - die erforderlichen Verformungsarbeiten vorgenommen werden können.

Die vorliegende Erfindung beschreibt demgemäss eine Spannverbindung, wie sie für beliebige Maschinenteile verwendet werden kann, bei denen es darum geht, eine Hülse mit einer in die Hülse greifenden Welle zu verbinden. Selbstverständlich beschränkt sich die Erfindung nicht auf diese Angabe, sondern die Erfindung bezieht sich auch auf sämtliche Anwendungsgebiete dieser Spannvorrichtung, z.B. auf die Befestigung einer Welle in einer Gelenkgabel, wobei die Gelenkgabel eine derartige Hülse trägt. Die Hülse kann hierbei werkstoffeinstückig oder auch werkstoffmehrstückig mit der Gelenkgabel verbunden sein.

Es wird also eine Exzenterverspannung beschrieben, weil die beschriebenen Keilnocken bei Verdrehung des Spannringes exzentrisch in Richtung radial einwärts auf die Nocken der Hülse auflaufen.

Zur Sicherung gegen axiales Verschieben der Welle in der Hülse wird es bevorzugt, wenn die Welle an ihrem Aussenumfang konkav ausgebildet ist, und die radial einwärts gerichtete Verformung der Hülse in diesen konkaven Querschnitt stattfindet, um der Welle eine Sicherung gegen axiales Verschieben in der Hülse zu geben.

In einer anderen Ausführungsform wird vorgeschlagen, daß anstatt der konkaven Formgebung des Teils der Welle, welcher von der Hülse umgeben ist, eine Ringnut in die Welle eingearbeitet wird, in welche sich die entsprechenden profilierten Abschnitte der Hülse radial einwärts gerichtet verformen.

Bei beiden Ausführungsformen ist vorteilhaft, daß hierbei die Wellen montierbar in der Gelenkgabel gehalten werden, d.h. mit Hilfe der beschriebenen Spannvorrichtung kann durch eine einzige Spannbewegung die Welle endgültig in der Gelenkgabel festgelegt werden und kann nachher wieder entfernt werden.
Es handelt sich also um eine montierbare und demontierbare Welle in einer Gelenkgabel, die mit der erfindungsgemässen Spannvorrichtung in der Gelenkgabel montiert werden kann.

In einer weiteren Ausführungsform der vorliegenden Erfindung ist vorgesehen, die Welle in ansich bekannter Weise nicht montierbar und demontierbar in der Gelenkgabel zu halten, wonach dann nach der Montage mit Hilfe des Spannrings die Welle in der Gelenkgabel vernietet, verklebt oder verschweisst wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert in Seitenansicht und teilweise im Schnitt eine Gelenkgabel,
- Figur 2:: Schnitt durch den Spannring,
- Figur 3:: Draufsicht auf den Spannring,
- Figur 4:: Schnitt durch eine erste Spannverbindung,
- Figur 5:: Schnitt durch eine zweite Spannverbindung,
- Figur 6:: Schnitt durch eine dritte Spannverbindung,
- Figur 7:: Längsschnitt durch eine Spannverbindung nach den Figuren 4 bis 6,
- Figur 8:: die Seitenansicht einer Welle bezüglich einer Spannverbindung nach Figur 4,
- Figur 9-10:: zeigen, wie eine konkave Ausführung an den Wellenenden im Spannbereich hergestellt werden kann.

In dem folgenden Ausführungsbeispiel wird die Verspannung einer Welle 12 im Bereich einer Gelenkgabel 1 gezeigt, wobei dieses Ausführungsbeispiel die Erfindung nicht beschränkt. Eine Gelenkgabel 1 ist hierbei an der Hülse 2 angeformt, welche eine Bohrung 3 bildet. Die Hülse 2 ist in ansich bekannter Weise mit einer Innenverzahnung 15 versehen.

Es wird ein Spannring 4 verwendet, der an seinem Aussenumfang etwa zylinderförmig ausgebildet ist und in dessen inneren Ausnehmung 5 eine Anzahl von Keilnocken 6 gleichmässig verteilt am Umfang angeordnet sind. Die Keilnocken 6 weichen hierbei von dem zylindrischen Bohrungskreis 13 der inneren Ausnehmung 5 ab, indem sie sich von einer Basis 8 ausgehend radial einwärts gerichtet verengen und hierbei gleichzeitig einen Konus 7 bilden, dessen Spitze 9 demgemäss schmäler ist als die Breite der Basis 8.

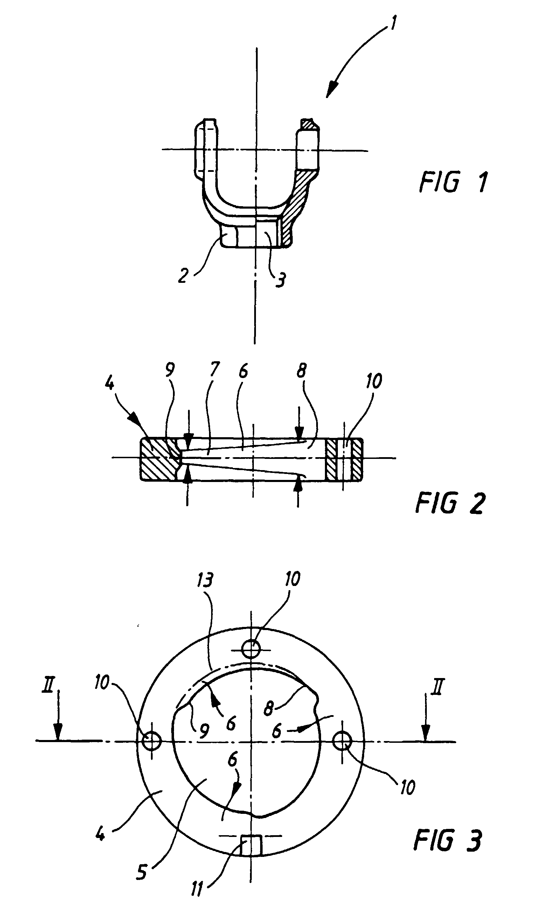

Im Bereich des Spannringes 4 sind in der Deckfläche ein oder mehrere Spannöffnungen 10 angeordnet, die z.B. als durchgehende Bohrungen (Figur 2) ausgebildet sind oder die auch als Spannöffnungen 11 geformt sein können. In diesem Fall erstrecken sich die Spannöffnungen 11 radial einwärts gerichtet als Sackbohrungen in der Mantelfläche des Spannringes.

Die Spannöffnungen 10,11 können als Sackbohrungen, als durchgehende Bohrungen als profilierte Ausnehmungen oder dergleichen ausgebildet sein.

Zum Herstellen der Spannverbindung wird nun der Spannring 4 mit seiner Ausnehmung 5 auf den Aussenumfang der Hülse 2 aufgeschoben.

Hierbei ist wesentlich, daß am Aussenumfang der Hülse mehrere gleichmässig am Umfang verteilt angeordnete Nocken 17 vorhanden sind, wobei die Anzahl der Nocken 17 genau der Anzahl der Keilnocken 6 entspricht.

Die Länge 25 der Nocken 17 ist so gewählt, daß nur in diesem Bereich eine radial einwärts gerichtete Verformung der gesamten Hülse 2 stattfindet, wodurch sich demgemäss auch die Mantelfläche 26 der Hülse in diesem Bereich radial einwärts verformt.

Die Höhe der Keilnocken, d.h. also deren radial einwärts sich vermindernder Durchmesser, ist so auf die Länge 25 der Nocke 17 abgestimmt, daß es zu einer Selbsthemmung kommt.

Bezüglich der Verformung der Hülse ist wichtig, daß es sich hierbei um eine Dreipunktverformung handelt, nämlich weil im Ausführungsbeispiel nach Figur 5 drei Nocken 17 vorhanden sind, die sich über den Kreisumfang 16 der Hülse 2 hinaus radial auswärts erstrecken.

Bei Verdrehung des Spannringes 4 in Umfangsrichtung kommt es damit zu einem Verformungsdruck 18 der Keilnocken 6 auf die zugeordneten Nocken 17 der Hülse 2, wobei dieser radial einwärts gerichtete Verformungsdruck 18 die Hülse genau definiert im Bereich dieser Nocken radial einwärts verformt.

Wichtig hierbei ist, daß die anderen Hülsenquerschnitte, die zwischen den Nocken 17 liegen, sich ausbeulen und radial auswärts gerichtet sich von der Welle abheben, so daß insgesamt die Hülse sich teilweise radial einwärts und teilweise radial auswärts verformt.

Hierbei kommt es zu einer form- und kraftschlüssigen Anlage der Innenbereiche der Hülse 2 im Bereich der Nocken 17, wodurch sich die Innenverzahnung 15 der Hülse form- und kraftschlüssig an die zugeordnete Aussenverzahnung 14 der Welle 12 örtlich anlegt.

Im Ausführungbeispiel nach Figur 5 ist eine Dreikantwelle 19 dargestellt, die mit ihren Profilquerschnitten 20 in zugeordnete Nuten am Innenumfang der Hülse 2 eingreift. Bei unverformter Hülse besteht hier ein Spielraum 21, um so die Dreikantwelle 19 ungehindert durch die Hülse 2 hindurchstecken zu können.

Erst wenn die Spannverbindung mit dem erwähnten Spannring 4 gespannt wird, kommt es zu einer örtlichen Verformung im Bereich der Nocken 17, wobei die Nocken genau radial gegenüberliegend den Profilquerschnitten 20 angeordnet sind.

Es wird also nur in diesem Bereich gesteuert der Spielraum 21 zwischen der Hülse und den zugeordneten Profilquerschnitten 20 der Welle 19 verringert und damit eine keilförmige Spannwirkung erzielt.

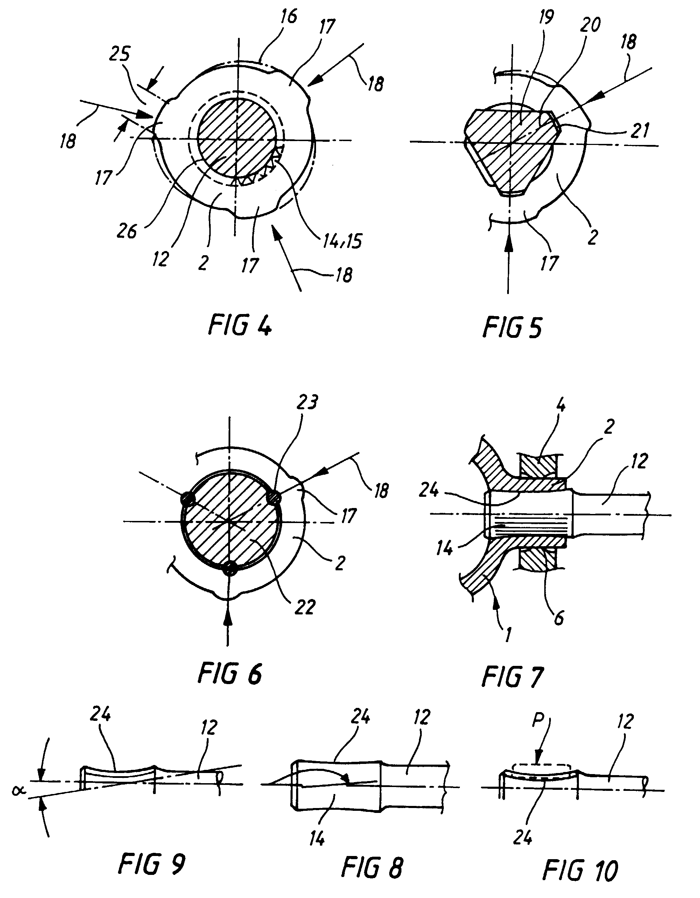

Im Ausführungsbeispiel nach Figur 6 wird eine Zylinderwelle 22 gezeigt, welche an ihrem Aussenumfang Zylinderstifte 23 in konkaven Nuten trägt, die wiederum in zugeordnete Nuten am Innenumfang der Hülse 2 eingreifen. Diesen Nuten gegenüberliegend sind wiederum die Nocken 17 angeordnet, wobei die Nocken 17 auch rundprofiliert mit relativ kurzer Länge ausgebildet sein können.

Statt der hier erwähnten Zylinderstifte 23 können auch Pass-Stifte verwendet werden, Passkeile oder die Zylinderstifte 23 können direkt werkstoffeinstückig mit der Zylinderwelle 22 verbunden sein.

Im Ausführungsbeispiel nach der Figur 7 eine erste Möglichkeit zur Lagensicherung der Welle 12 gegen axiale Verschiebung in der Hülse 2 dargestellt.

Hierbei wird es bevorzugt, wenn die Welle 12 an ihrem Aussenumfang, welcher in die Hülse 2 eingreift eine Schlüpfform aufweist und eine Hohlverzahnung 24 bildet, um so zu erreichen, daß die gesteuert radial einwärts gerichteten Verformungen in diese konkaven Hohlverzahnungen eingreifen und die Welle gegen axiales Verschieben in der Hülse 3 sichern.

Es wird im übrigen noch darauf hingewiesen, daß durch Aneinandergleiten der Keilnocken 6 des Spannringes 4 am Aussenumfang der Nocken 17 der Hülse 2 es noch zu einer weiteren Lagensicherung kommt, denn aufgrund des aufgewendeten hohen spezifischen Flächendrucks kommt es zu einer Verformung der Keilnocken 6 an den Nocken 17, die sich an den Nocken 17 festbeissen und sich in das Material der Nocken 17 einverformen.

Bei der vorliegenden Erfindung wird es bevorzugt, wenn mindestens die Hülse und der Spannring aus einem Metallmaterial bestehen, z. B. aus einem Druckguss, Stahl, Leichtmetall, Bronze und dergleichen mehr.

Es werden jedoch auch Kunststoffmaterialien vorgeschlagen.

Die Welle 12, 19, 22 kann entweder aus oben angegebenen Materialien oder aus anderem geeigneten Material bestehen.

Die Verdrehung des Spannringes 4 erfolgt hierbei mit einem nicht näher dargestellten Werkzeug, welches im wesentlichen ein oder mehrere Vorsprünge aufweist, die in die zugeordneten Spannöffnungen 10,11 eingreifen, wobei diese Vorsprünge mit einem Hebelarm angeordnet sind, der mit der Hand oder mit der Maschine verdrehbar ist.

In Figur 9 ist dargestellt, daß durch die Schrägeinstellung von einigen Winkelminuten mit herkömmlichen Fräsern oder Profilrollen die Hohlverzahnung 24 hergestellt werden kann. Figur 10 zeigt, daß beim Einsatz von Zylinderstiften die Nutenbetten konkav erstellt sein müssen, damit diese beim Spannen durch Einfedern/Durchbiegen die axiale Sicherung gewährleisten.

### -Zeichnungs-Legende-

- 1: Gelenkgabel
- 2: Hülse
- 3: Bohrung
- 4: Spannring
- 5: Ausnehmung
- 6: Keilnocke
- 7: Konus
- 8: Basis
- 9: Spitze
- 10: Spannöffnung
- 11: Spannöffnung
- 12: Welle
- 13: Bohrungskreis
- 14: Außenverzahnung
- 15: Innenverzahnung
- 16: Kreisumfang
- 17: Nocke
- 18: Verformungsdruck
- 19: Dreikantwelle
- 20: Profilquerschnitt
- 21: Spielraum
- 22: Zylinderwelle
- 23: Zylinderstift
- 24: Hohlverzahnung
- 25: Länge (Nocke 17)
- 26: Mantelfläche

## Patentansprüche

1. Spannverbindung zwischen einer Hülse und einer Welle, wobei die Hülse als Spannhülse ausgebildet ist, die die Welle am Umfang einspannt, und die auf die Welle (12) geführte Hülse (2) mindestens teilweise radial verformbar ausgebildet ist, wobei am Außenumfang der Hülse (2) ein in Umfangsrichtung verdrehbarer Spannring (4) anliegt, der mit seiner Ausnehmung den Außenumfang der Hülse (2) umgreift, und die Ausnehmung des Spannringes (4) an seinem Innenumfang in radialer Richtung keilförmig verlaufende Steuerflächen aufweist, die sich am Außenumfang der Hülse anlegen,
dadurch gekennzeichnet, daß
am Umfang der Hülse (2) verteilt ein oder mehrere Nocken (17) radial auswärts gerichtet angeformt sind, die mit den keilförmig sich verengenden Steuerflächen des Spannringes (4) zusammen wirken, und daß die Welle (12) im Spannbereich mit einem nicht-zylindrischen Profil versehen ist, das in das Profil am Innenumfang der Hülse (2) nach Herstellung der Spannverbindung formschlüssig eingreift.

2. Spannverbindung nach Anspruch 1, **dadurch** **gekennzeichnet**, daß die Welle (12) eine Außenverzahnung (14) besitzt, die mit einer Innenverzahnung (15) der Hülse (2) korrespondiert.

3. Spannverbindung nach Anspruch 1 oder 2, **dadurch gekennzeichnet**, daß die Welle (12) ein Mehrkantprofil, insbesondere ein Dreikantprofil besitzt, und der Innenumfang der Hülse (2) entsprechende Nuten aufweist.

4. Spannverbindung nach einem der Ansprüche 1 - 3, **dadurch gekennzeichnet**, daß am Außenumfang der Welle (12) mehrere Zylinderstifte (23) oder Paßstifte eingelegt sind, und der Innenumfang der Hülse (2) entsprechende Nuten besitzt.

5. Spannverbindung nach einem der Ansprüche 1 - 4, **dadurch gekennzeichnet**, daß an die Welle (12) angeformte, profilierte Mehrkantvorsprünge vorhanden sind, denen zugeordnete Nuten am Innenumfang der Hülse (2) gegenüber stehen.

6. Spannverbindung nach einem der Ansprüche 1 bis 5, **dadurch gekennzeichnet,** daß die Welle (12) an ihrem Außenumfang konkav ausgebildet ist.

7. Spannverbindung nach einem der Ansprüche 1 bis 5, **dadurch gekennzeichnet**, daß die Welle (12) in dem von der Hülse (2) umgebenen Teil eine Ringnut aufweist, in welche die Hülse (2) eingreift.

8. Spannverbindung nach einem der Ansprüche 1 bis 7, **dadurch gekennzeichnet,** daß die Keilnocken (6) von ihrer Basis (8) ausgehend konisch verjüngt sind.

9. Spannverbindung nach einem der Ansprüche 1 bis 8, **dadurch gekennzeichnet**, daß zur Befestigung einer Vorrichtung, insbesondere einer Gelenkgabel (1), an einem profilierten Außenumfang der Welle (12), die Hülse (2) werkstoffeinstückig oder werkstoffmehrstückig mit der Vorrichtung verbunden ist.

10. Spannverbindung nach einem der Ansprüche 1 bis 9, **dadurch gekennzeichnet,** daß Hülse (2) und Welle (12) durch Verschweißen, Verkleben oder Vernieten unlösbar verbunden sind.

11. Spannverbindung nach einem der Ansprüche 1 bis 10, **dadurch gekennzeichnet**, daß die Hülse zumindest in der Spannzone als einstückiges, ungeschlitztes Teil ausgebildet ist.

## Claims

1. Clamping connection between a sleeve and a shaft, in which the sleeve is constructed as a clamping sleeve which clamps the shaft on the circumference and the sleeve (2), guided onto the shaft (12) is constructed so as to be at least partially radially deformable, in which a circumferentially rotatable clamping ring (4) lies against the outer circumference of the sleeve (2) and grasps around the outer circumference of the sleeve (2) with its opening, and the opening of the clamping ring (4) has on its inner circumference control surfaces running in a wedge shape in radial direction, which lie against the outer circumference of the sleeve,
characterised in that
one or more cams (17) are formed, directed radially outwards, distributed on the circumference of the sleeve (2), which cams (17) cooperate with the control surfaces of the clamping ring (4) which narrow in a wedge shape, and that the shaft (12) is provided in the clamping region with a non-cylindrical profile, which engages in a form-fitting manner into the profile on the inner circumference of the sleeve (2) after production of the clamping connection.

2. Clamping connection according to Claim 1,
characterised in that
the shaft (12) has an outer toothing (14) which corresponds with an inner toothing (15) of the sleeve (2).

3. Clamping connection according to Claim 1 or 2,
characterised in that
the shaft (12) has a multiple-sided profile, in particular a three-sided profile, and the inner circumference of the sleeve (2) has corresponding grooves.

4. Clamping connection according to one of Claims 1-3,
characterised in that
on the outer circumference of the shaft (12) several cylinder pins (23) or fitting pins are inserted, and the inner circumference of the sleeve (2) has corresponding grooves.

5. Clamping connection according to one of Claims 1-4,
characterised in that profiled multiple-sided projections, formed onto the shaft (12), are present, opposed to which are associated grooves on the inner circumference of the sleeve (2).

6. Clamping connection according to one of Claims 1 to 5,
characterised in that
the shaft (12) is constructed so as to be concave on its outer circumference.

7. Clamping connection according to one of Claims 1 to 5,
characterised in that
the shaft (12) in the part surrounded by the sleeve (2) has an annular groove into which the sleeve (2) engages.

8. Clamping connection according to one of Claims 1 to 7,
characterised in that
the wedge cams (6) are narrowed conically starting from their base (8).

9. Clamping connection according to one of Claims 1 to 8,
characterised in that
for the securing of a device, in particular of a knuckle yoke (1), on a profiled outer circumference of the shaft (12), the sleeve (2) is connected with the device in one piece material or multiple-piece material.

10. Clamping device according to one of Claims 1 to 9,
characterised in that
sleeve (2) and shaft (12) are undetachably connected by welding, glueing or rivetting.

11. Clamping connection according to one of Claims 1 to 10,
characterised in that
the sleeve is constructed at least in the clamping zone as a one-piece, non-slotted part.

## Revendications

1. Liaison par serrage entre une douille et un arbre, étant précisé que la douille est conçue comme une douille de serrage qui enserre l'arbre, sur sa périphérie, et que la douille (2) guidée sur l'arbre (12) est au moins partiellement déformable radialement, et étant précisé qu'il est prévu, appliquée contre la périphérie extérieure de la douille (2), une bague de serrage (4) apte à être tordue dans le sens périphérique et entourant avec son creux la périphérie extérieure de la douille de serrage (2), et enfin que le creux de la bague de serrage (4) présente, sur sa périphérie intérieure, des surfaces de commande qui s'étendent en forme de coin dans le sens radial et qui s'appliquent contre la périphérie extérieure de la douille,
caractérisée en ce qu'il est prévu, réparties sur la périphérie de la douille (2) et rapportées en étant dirigées radialement vers l'extérieur, une ou plusieurs saillies (17) qui coopèrent avec les surfaces de commande de la bague de serrage (4) qui vont en rétrécissant suivant une forme de coin, et en ce que l'arbre (12) est pourvu, dans la zone de serrage, d'un profil non cylindrique qui, une fois que la liaison par serrage est réalisée, s'engage par complémentarité de forme dans le profil prévu sur la périphérie intérieure de la douille (2).

2. Liaison par serrage selon la revendication 1, caractérisée en ce que l'arbre (12) a une denture extérieure (14) qui correspond à une denture intérieure (15) de la douille (2).

3. Liaison par serrage selon la revendication 1 ou 2, caractérisée en ce que l'arbre (12) a un profil polygonal, en particulier triangulaire, et la périphérie intérieure de la douille (2) présente des rainures correspondantes.

4. Liaison par serrage selon l'une des revendications 1 à 3, caractérisée en ce que plusieurs tiges cylindriques (23) ou tiges d'assemblage sont placées sur la périphérie extérieure de l'arbre (12), et la périphérie intérieure de la douille (2) présente des rainures correspondantes.

5. Liaison par serrage selon l'une des revendications 1 à 4, caractérisée en ce qu'il est prévu, rapportées sur l'arbre (12), des saillies polygonales profilées en face desquelles se trouvent des rainures associées, sur la périphérie intérieure de la douille (2).

6. Liaison par serrage selon l'une des revendications 1 à 5, caractérisée en ce que l'arbre (12) présente sur sa périphérie extérieure une forme concave.

7. Liaison par serrage selon l'une des revendications 1 à 5, caractérisée en ce que l'arbre (12) présente, dans la partie entourée par la douille (2), une rainure annulaire dans laquelle la douille (2) pénètre.

8. Liaison par serrage selon l'une des revendications 1 à 7, caractérisée en ce que les saillies en forme de coins (6) vont en s'effilant en cône à partir de leur base (8).

9. Liaison par serrage selon l'une des revendications 1 à 8, caractérisée en ce que pour la fixation d'un dispositif, en particulier d'une fourche d'articulation (1), à une périphérie extérieure profilée de l'arbre (12), la douille (2) est reliée, en une seule pièce ou en plusieurs pièces, au dispositif.

10. Liaison par serrage selon l'une des revendications 1 à 9, caractérisée en ce que la douille (2) et l'arbre (12) sont reliés de façon non détachable par soudage, collage ou rivetage.

11. Liaison par serrage selon l'une des revendications 1 à 10, caractérisée en ce que la douille, au moins dans la zone de serrage, est conçue comme un élément non fendu en une seule pièce.
